Europäisches Patentamt

European Patent Office

Office européen des brevets

(19)

(11) Veröffentlichungsnummer: **0 145 877**

**B1**

(12)

# EUROPÄISCHE PATENTSCHRIFT

(45) Veröffentlichungstag der Patentschrift:
02.08.89

(21) Anmeldenummer: 84112134.6

(22) Anmeldetag: 10.10.84

(51) Int. Cl.⁴: **G 01 N 21/31, G 01 N 21/85**

(54) Fotometer zur kontinuierlichen Analyse eines Mediums (Gas oder Flüssigkeit).

(30) Priorität: 04.11.83 DE 3339950
15.06.84 DE 3422309
26.06.84 DE 3423471
29.06.84 DE 3423922

(43) Veröffentlichungstag der Anmeldung:
26.06.85 Patentblatt 85/26

(45) Bekanntmachung des Hinweises auf die Patenterteilung:
02.08.89 Patentblatt 89/31

(84) Benannte Vertragsstaaten:
CH DE FR GB LI NL

(56) Entgegenhaltungen:
EP-A-0 039 088
US-A-4 126 396

PATENTS ABSTRACTS OF JAPAN, Band 7, Nr. 160
(P-210)(1305), 14. Juli 1983; & JP - A - 58 68645
(MITSUBISHI JUKOGYO K.K.) 23.04.1983
MESSEN + PRÜFEN, Nr. 5, Mai 1981, Seiten 284-286,289,292, Bad Wörlshofen, DE; K.W. BONFIG et
al.: "Untersuchung der Durchlichtintensitäten im
nahen Infrarotbereich in schwach getrübtem
Wasser"

(73) Patentinhaber: Hartmann & Braun
Aktiengesellschaft, Gräfstrasse 97, D-6000
Frankfurt am Main 90 (DE)

(72) Erfinder: Schaefer, Werner, Dr., Albert-Schweitzer- Strasse 12, D-6242 Kronberg 2 (DE)
Erfinder: Zöchbauer, Michael, Ebertstrasse 19,
D-6370 Oberursel (DE)
Erfinder: Medebach, Helmut, Friedrich- Ebert-Strasse 17, D-6301 Heuchelheim (DE)
Erfinder: Fabinski, Walter, An der Landwehr 70,
D-6239 Kriftel (DE)

EP 0 145 877 B1

**Beschreibung**

Die Erfindung betrifft ein Fotometer mit den im Oberbegriff des Anspruches 1 oder des Anspruches 2 genannten Merkmalen.

In der EP-OS-0 039 088 ist eine Meßanordnung zur Bestimmung der Konzentration gelöster organischer Stoffe in einer Flüssigkeit beschrieben. Sie umfaßt eine Strahlungsquelle und eine Filtereinrichtung, die abwechselnd Strahlung in zwei unterschiedlichen Spektralbereichen einer Meßstrecke in einem mit Probenflüssigkeit gefüllten Meßgefäß zuführt. Ein strahlungsdurchlässiger Verdrängungskörper verkürzt die optisch wirksame Weglänge in der Probenflüssigkeit auf eine zweite Weglänge Die Verschiebung des Verdrängungskörpers erfolgt mit Hilfe eines Antriebes und einer Steuerscheibe.

In "Abstracts of Japan", Band 7, Nr. 160, (P-210) (1305), 14. Juli 1983, JA-A-5 868 645 ist eine Methode zur Messung der Konzentration von Partikeln in einem Gasstrom unter Verwendung eines Lichtstrahles beschrieben, der den Gasstrom über ein Lichtleitkabel durchläuft. Die optische Weglänge des Lichtstrahles im Medium wird periodisch verändert durch periodische Bewegungen des Lichtleitkabels. Ein Detektor erfaßt die Strahlung bei zwei definierten Weglängen, die durch die maximale und die minimale Distanz bei einer Schwingung des Lichtleitkabels gegeben ist.

In dem Aufsatz "Untersuchung der Durchlichtintensitäten im nahen Infrarotbereich in schwach getrübtem Wasser" von Prof. Dr. Bonfig und Kramp aus "Messen & Prüfen", Nr. 5, Mai 1981, Seiten 284-286 ist ein optoelektronischer Meßaufbau mit IR-Diode als Sender und einer Fotodiode als Empfänger beschrieben, bei dem die Weglänge des IR-Strahles im Medium durch Verschiebung des Empfängerkopfes veränderbar ist.

In der DE-AS-2 521 934 wird ein Fotometer beschrieben, das nach dem Autokollimationsprinzip arbeitet. Dieses Fotometer ist mit drei optischen Filtern ausgerüstet, von denen jedes auf eine bestimmte Wellenlänge abgestimmt ist, so daß es möglich ist, drei Stoffkomponenten eines Gasgemisches zu bestimmen. Dieses Fotometer ist insofern nachteilig, als es nicht beliebig erweitert bzw. modifiziert werden kann, um eine größere Anzahl von Meßkomponenten zu erfassen oder etwaige Querempfindlichkeits-Korrekturen durchzuführen. Außerdem sind bei diesem bekannten Fotometer trotz Verhandenseins eines Vergleichsreflektors Verschmutzungen der Bauelemente in der Meßstrecke, wie Fenster und Reflektor, nicht exakt zu kompensieren.

Diese bekannten Fotometer haben den Nachteil, daß zur Einstellung unterschiedlicher Absportionsstrecken mechanisch bewegte Teile benötigt werden, die verschleißbehaftet sind.

Durch die DE-PS-2 363 431 ist eine Meßanordnung zur Bestimmung der Strahlungsabsorption in einem flüssigen oder gasförmigen Medium bekannt geworden, die so ausgebildet ist, daß sowohl Meßstrecke als auch Referenzstrecke im Meßmedium liegen. Bei dieser Meßanordnung ist die Erfassung mehrerer Komponenten eines Stoffgemisches jedoch nicht möglich.

Der Erfindung liegt die Aufgabe zugrunde, ein nach dem Wellenlängen-Vergleichsverfahren für die Gas- oder Flüssigkeitsanalyse, insbesondere in einem Prozeßstrom, kontinuierlich arbeitendes Fotometer der eingangs genannten Art zu schaffen, das erlaubt, neben Drift und Alterung von optischen Bauelementen die Einflüsse der im Meßmedium befindlichen Verunreinigungen, deren Absorption wellenlängenabhängig ist, zu kompensieren und das gleichzeitig gewährleistet, mehrere Komponenten eines Stoffgemisches im Echtzeitbetrieb zu erfassen. Dabei sind auch solche Fälle einzuschließen, in denen sich die Absorptionsspektren einer Meßkomponente und mehrerer Begleitkomponenten überlagem, was eine Korrektur zur Eliminierung der Störeinflüsse notwendig macht. Das Fotometer soll ohne mechanisch bewegte Teile im Medium arbeiten.

Die Lösung der Aufgabe gelingt mit den im Anspruch 1 oder im Anspruch 2 angegebenen Merkmalen. Die abhängigen Ansprüche beziehen sich auf vorteilhafte weitere Ausgestaltungen.

Das erfindungsgemäß ausgebildete Fotometer kann zur Analyse jedes Mediums eingesetzt werden, das aus mindestens zwei Komponenten besteht. Das Fotometer kann so aufgebaut sein, daß zwei abwechselnd eingeschaltete Lichtquellen unterschiedlicher Frequenzen vorgesehen sind, wobei zur Erzeugung des Signalpaares jeder der zwei Lichtstrahlen vor Eindringen in das zu analysierende Medium in zwei Teilstrahlen aufgeteilt ist, die nach Verlassen des Mediums auf zwei getrennte Fotoempfänger auftreffen, die in den Spektralbereichen des Lichtes beider Lichtquellen sensitiv sind. Hierbei durchlaufen die Teilstrahlen im Medium gleichzeitig zwei parallele Absorptionsstrecken unterschiedlicher Länge.

Einfach gestalten sich die Verhältnisse, wenn zur Zweiteilung des Lichtstrahles ein zweigeteiltes Lichtfaserbündel vorgesehen wird. Es ist auch möglich, hierzu schräggestellte Spiegel zu benutzen. Der Lichtstrahl fällt auf einen teildurchlässigen Spiegel, der einen Teil des Lichtes in das Medium sendet und einen Teil auf einen zweiten Spiegel richtet, der den zweiten Teilstrahl in das Medium sendet.

Ein Fotometer, das mit Lichtquellen unterschiedlicher Wellenlängen arbeitet, kann in vorteilhafter Weise weitergebildet sein, derart, daß die zwei Lichtquellen aus zwei rechtwinkelig zueinander angeordneten Glühlampen mit vorgeschaltetem Interferenzfilter bestehen, die ihre Strahlen vorgegebener Frequenz durch einen teildurchlässigen Spiegel über eine Kollimatorlinse einem Lichtfaserbündel zuleiten.

Der die Kollimatorlinse verlassende Lichtkegel wird an die jeweiligen Verhältnisse angepaßt, wozu eine Blende mit verstellbarer Apertur vorgesehen sein kann. Das Faserbündel leitet das Licht in einen das zu analysierende Medium enthaltenden Behälter weiter.

Das Lichtfaserbündel gabelt sich in zwei Zweige, an die zwei Lichtleitstäbe angeschlossen sind, die die zwei so erzeugten Lichtstrahlen jeder Lichtquelle zu dem Medium führen. Die Lampen, Interferenzfilter zusammen mit dem teildurchlässigen Spiegel, der Kollimatorlinse sowie der Blende sind zu einer Baueinheit zusammengefaßt.

Eine Ausführungsform der Erfindung besteht darin, daß bei einem Fotometer der in ein zu analysierendes

Gemisch eindringende Eingangslichtstrahl durch einen Lichtleiter im Medium einem optischen Umlenkorgan zugeführt wird, der den Eingangslichtstrahl derart reflektiert, daß ein Teil des reflektierten Lichtes nach Durchlaufen einer kurzen Absorptionsstrecke von einem ersten Lichtleiter und ein anderer Teil des reflektierten Lichtes nach Durchlaufen einer längeren Absorptionsstrecke von einem zweiten Lichtleiter aufgenommen wird. Die Lichtleiter für die Teilstrahlen leiten die durch Absorption entstehenden unterschiedlichen Signale einer Verarbeitungsvorrichtung zu; dort werden die Signale zur Ermittlung der Konzentration der Komponenten miteinander verknüpft. Sehr einfach gestalten sich die Verhältnisse, wenn als Lichtleiter Lichtleitstäbe verwendet werden.

Wenn sich als Umlenkorgane eine Reihe von optischen Elementen z. B. Spiegel anbieten, wird man jedoch einem Prisma mit verspiegelten Katheten den Vorzug geben. Die Anordnung eines Prismas bringt den Vorteil, daß der Lichtleiter für den Eingangslichtstrahl direkt an die Oberfläche des Prismas angekoppelt werden kann. Dadurch entsteht keine Übergangszone.

Die Lichtleiter sind mit dem Prisma zu einer kompakten baulichen Einheit verbunden, die einfach in einen von dem zu analysierenden Medium durchströmten Behälter eingesetzt werden kann. Es ist möglich, den so entstandenen Sensor mit einer Strahlungsquelle zu kombinieren. Auf diese Weise entsteht ein Analysator für Gase oder Flüssigkeit von einer Höhe von etwa 30 cm und einem Durchmesser von weniger als 20 cm.

Die Erfindung wird anhand der Zeichnung näher erläutert.

Fig. 1            zeigt sich schematisch überlappende Absorptionslinien dreier Komponenten eines Mediums,
Fig. 2            zeigt den Gesamtaufbau eines fotometrischen Analysengerätes,
Fig. 3            zeigt den Verlauf der Strahlungsintensität in Abhängigkeit von der Zeit,
Fig. 4            und Fig. 5 zeigen Fotometer gemäß der Erfindung, bei denen der Lichtstrahl vor dem Eintreten in das Medium in zwei Teilstrahlen aufgeteilt ist,
Fig. 6            zeigt den Gesamtaufbau eines mit zwei Lichtquellen verschiedener Wellenlängen ausgestatteten Fotometers.
Fig. 7            zeigt die Lichtquelleneinheit des Fotometers nach Fig. 6.
Fig. 8            zeigt die Lichtquelleneinheit von der Seite.
Fig. 9            zeigt den Grundriß dieser Einheit,
Fig. 10          stellt den in ein Medium einzusetzenden Teil eines Fotometers dar,
Fig. 11          stellt im Prinzip den Gesamtaufbau des Fotometers nach Fig. 10 dar.

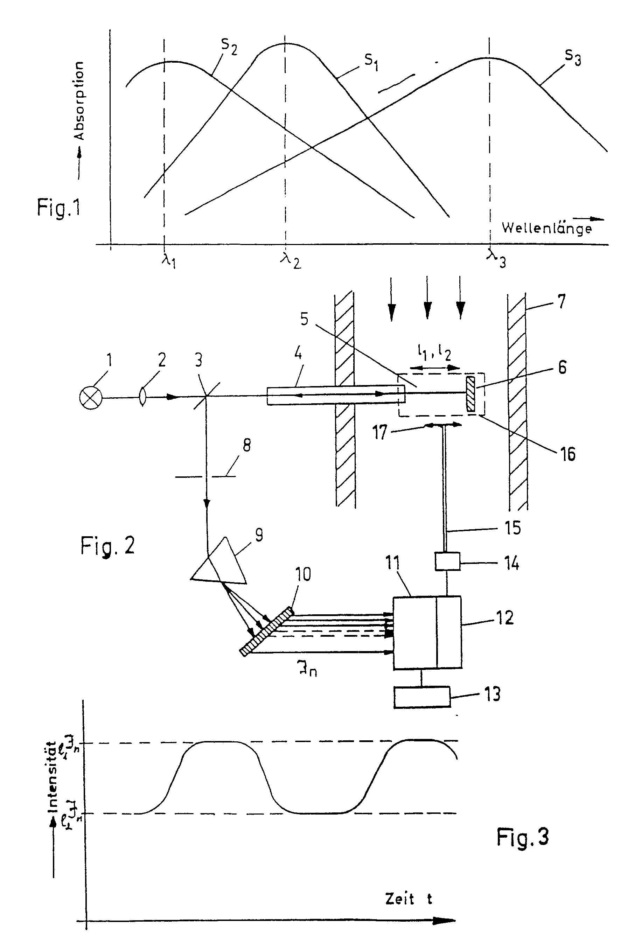

In Figur 1 sind über der Wellenlänge $\lambda$ die Absorptionsspektren der drei Komponenten $S_1$, $S_2$ und $S_3$ eines Gemisches gezeichnet. An den ausgesuchten Wellenlängen $\lambda_1$, $\lambda_2$ und $\lambda_3$ haben die Absorptionskurven ihre Maxima. Für die Extinktion $E_n$ bei einer beliebigen Wellenlänge $\lambda_n$ gilt die allgemeine Beziehung:

$$E_n = l\,(E_{n1} \cdot C_1 + E_{n2} \cdot C_2 + E_{n3} \cdot C_3 + \ldots E_{nk} \cdot C_k) \tag{Gl. 1}$$

In der Gleichung bedeuten:

$l$                    : Länge der Absorptionsstrecke,
$E_{n1} \ldots E_{nk}$  : Absorptionskoeffizienten der Komponenten $S_1 \ldots S_k$ bei der Wellenlänge $\lambda_n$ (vorgegeben),
$Cl \ldots C_k$         : Konzentrationen der Komponenten $S_1 \ldots S_k$. Dabei ist $n \geq k$.

Enthält wie im gewählten Beispiel das Gemisch drei Komponenten; so besteht der Klammerausdruck in Gleichung 1 aus drei Gliedern. Wird die Extinktion E bei drei Wellenlängen ermittelt, ergeben sich drei Gleichungen für die drei Unbekannten $C_1$, $C_2$ und $C_3$, die nach bekannten Algorithmen zu lösen sind.

Die Extinktion ist mit der Strahlungsintensität durch die Gleichung 2 verknüpft:

$$E_n = -\,l_n \frac{l_n}{_0 l_n} \tag{Gl. 2}$$

In der Gleichung bedeuten:

$l_n$ : Intensität nach Durchlaufen der Strecke 1,
$_0 l_n$ : Intensität vor Durchlaufen der Strecke 1.

Fig. 2 zeigt schematisch den Gesamtaufbau eines nach dem Wellenlängen-Vergleichsverfahren arbeitenden Fotometers, dessen Wirkungsweise nachstehend erläutert wird.

Das Fotometer arbeitet nach dem Autokollimationsverfahren. Die von der breitbandigen Strahlungsquelle 1 ausgehenden Strahlen werden durch die Kollimatorlinse 2 gebündelt und gelangen über den Strahlteiler 3 in die Strahlleitvorrichtung 4 und von da über die Absorptionsstrecke 5 zu dem Reflektor 6. Die Reflexionsstrecke 5 befindet sich direkt im zu analysierenden Medium, das die Rohrleitung 7 durchströmt. Die Länge der Absorptionsstrecke 5 ist durch den Abstand des Reflektors 6 vom reflektorseitigen Ende der Strahlleitvorrichtung 4 bestimmt.

Der Reflektor 6 wirft die Strahlen durch die Strahlleitvorrichtung 4 zurück zum Strahlteiler 3, der die Strahlen abbiegt und durch einen Spalt 8 auf das Prisma 9 lenkt. Die polychromatischen Strahlen werden dispergiert. Das dispergierte Licht wird auf einen Detektor 10 abgebildet, der aus einzelnen Fotoempfängern besteht, die im interessierenden Spektralbereich empfindlich sind. Jeder Fotoempfänger sendet ein der jeweiligen Wellenlänge zugeordnetes Signal in die Signalverarbeitungseinrichtung 11, die mit der Steuerelektronik 12 verbunden ist. An die Signalverarbeitungseinrichtung 11 ist außerdem das Anzeigegerät 13 angeschlossen.

Sind in dem Detektor 10 n einzelne Fotoempfänger angeordnet, so werden n Empfängersignale $I_n$ an die Signalverknüpfungseinheit 11 weitergegeben, in der durch eine Verknüpfung dieser Signale z. B. nach Regeln der Determinanten- bzw. Matrizen-Rechnung die gewünschten Konzentrationswerte $C_1 \ldots C_k$ ermittelt werden. Besteht das Medium beispielsweise aus drei Komponenten und werden die Signale dreier Fotoempfänger weiterverarbeitet, so ist für n und k jeweils 3 zu setzen. Für $C_1$ beispielsweise erhält man dann:

$$C_1 = \frac{1}{l \cdot D} \ln \frac{\left(\dfrac{I_2}{_0 I_2}\right)^{F_2}}{\left(\dfrac{I_1}{_0 I_1}\right)^{F_1} \cdot \left(\dfrac{I_3}{_0 I_3}\right)^{F_3}} \qquad \text{(Gl. 3)}$$

In der Gleichung 3 bedeuten:

l   = Länge der Absorptionsstrecke
D  = Konstante
$F_1 = E_{22} \cdot E_{33} - E_{32} \cdot E_{23}$
$F_2 = E_{12} \cdot E_{33} - E_{32} \cdot E_{13}$
$F_3 = E_{12} \cdot E_{23} - E_{22} \cdot E_{13}$

Um Störeinflüsse auf das so erzielte Meßergebnis, z. B. Drift der Strahlungsquelle oder der Fotoempfänger auszuschalten, ist es notwendig, auch die Werte $_0 I_n$ laufend zu erfassen. Dies könnte durch einen weiteren Reflektor erreicht werden, der ähnlich wie in der DE-AS-2 521 934 beschrieben - zwischen der Strahlleitvorrichtung 4 und dem teildurchlässigen Spiegel 3 in den Strahlengang eingeschwenkt wird. Auf diese Art sind jedoch Verschmutzungen der Absorptionsstrecke 5 durch Verunreinigungen im zu analysierenden Medium nicht kompensierbar. Dieser Nachteil wird dadurch beseitigt, daß der Reflektor 6 in der Rohrleitung 7 so angeordnet wird, daß er in Richtung der Lichtstrahlen bewegbar ist. Der Reflektor wird mittels einer Verschiebeeinrichtung 12 in Richtung des Doppelpfeiles 17 von einer definierten Stellung, die durch $l_2$ gekennzeichnet ist, in die Stellung $L_1$ gebracht und umgekehrt, in einem Zyklus, der vorher festgelegt wird. Auf diese Weise erhält die Absorptionsstrecke zwei Längen. Die größere Länge $l_2$ ist die Meßstrecke und die kleinere Länge $l_1$ die Referenzstrecke. Die Verschiebung der Verstelleinrichtung 16 erfolgt mit Hilfe der Spindel 15, die durch den an die Steuereinrichtung 12 angeschlossenen Schrittmotor 14 angetrieben wird.

Fig. 3 zeigt, wie die bei den zwei Längen aufgenommenen Intensitäten periodisch zwischen zwei Werten hin und her pendeln. Die Intensität für die Referenzstrecke $l_1$ ist mit $_{l_1}I_n$, die Intensität für die Meßstrecke $l_2$ mit $_{l_2}I_n$ bezeichnet.

Infolge der Ausgestaltung des Fotometers mit einem beweglichen Reflektor 6 ist in der Gleichung 3 die Länge l durch $(l_2 - l_1)$, $I_n$ durch $_{l_2}I_n$ und $_0 I_n$ durch $_{l_1}I_n$ zu ersetzen. Es ergibt sich somit die der Signalverarbeitungseinheit 11 vorzugebende Gleichung:

$$C_1 = \frac{1}{D(l_2 - l_1)} \ln \frac{\left(\dfrac{_{l_2}I_2}{_{l_1}I_2}\right)^{F_2}}{\left(\dfrac{_{l_2}I_1}{_{l_1}I_1}\right)^{F_1} \cdot \left(\dfrac{_{l_2}I_3}{_{l_1}I_3}\right)^{F_3}} \qquad \text{(Gl. 4)}$$

Wie sich durch Einsetzen in die Gleichung 4 nachweisen läßt, wird der Einfluß der Störgrößen wie Drift, Alterung oder Verschmutzung der optischen Bauelemente exakt eliminiert.

In der Signalverknüpfungseinheit wird also jeweils aus einem Paar von Signalen, die sich nach Durchlaufen des Lichtes durch die zwei definierten Wegstrecken ergeben, ein Quotient zur Speicherung gebildet. Zur Berechnung der gesuchten Konzentrationen $C_n$ werden die in der Signalverknüpfungseinheit 11 gespeicherten Quotienten durch einen geeigneten Algorithmus, vorzugsweise nach Gleichung 4, zueinander in Verbindung gesetzt.

Die zur Berechnung der Konzentrationen erforderlichen Absorptionskoeffizienten können durch das Fotometer unter Verwendung reiner Komponenten in einer Anfangsphase vor Beginn der Analyse bestimmt werden.

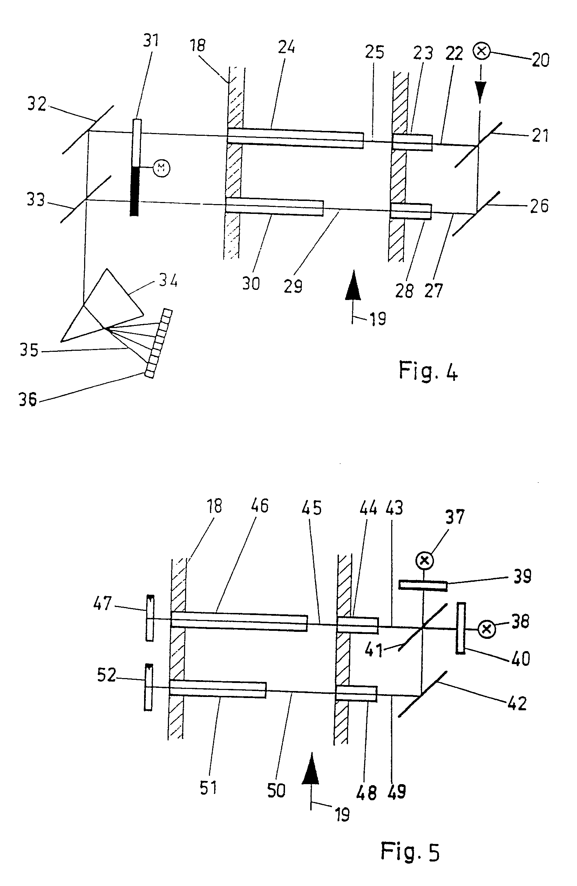

In der Anordnung nach Fig. 4 ist das aus mindestens zwei Komponenten bestehende Medium, das den Behälter 18 in Richtung des Pfeiles 19 durchströmt, zu analysieren, und zwar kontinuierlich. Hierzu ist eine Lichtquelle 20 vorgesehen, die Licht verschiedener Wellenlängen auf den geneigten Spiegel 21 sendet, der teildurchlässig ist. Ein Teilstrahl 22 wird von dem Spiegel 21 durch die Lichtleitvorrichtung 23 in den Behälter 18

reflektiert. Der Teilstrahl 22 durch läuft das Medium auf der Strecke 25 und verläßt den Behälter 18 durch die Lichtleitvorrichtung 24.

Der Teil des Lichtes, der den Spiegel 21 durchdringt, fällt auf den geneigten Spiegel 26, der das gesamte auf ihn treffende Licht als Teilstrahl 27 durch die Lichtleitvorrichtung 28 in den Behälter 18 sendet. Der Teilstrahl 27 durchläuft in dem Medium die Strecke 29 und verläßt den Behälter 18 durch die Lichtleitvorrichtung 30. Zur Erzielung der gewünschten Wirkung ist die Durchlaufstrecke 29 wesentlich länger als die Durchlaufstrecke 25.

In dem Weg der Teilstrahlen 22 und 27 ist ein Blendenrad 31 angeordnet, das die Teilstrecken periodisch gegenphasig unterbricht.

Hinter dem Blendenrad 31 sind die schrägstehenden Spiegel 32 und 33 vorgesehen, die die Teilstrahlen 22 und 27 in Richtung des Prismas 34 um lenken. Das dispergierende Licht 35 des Prismas 34 wird von einer Detektorzeile 36 aufgenommen, deren einzelne Fotoempfänger im interessierenden Spektralbereich empfindlich sind. Die Signalverarbeitung erfolgt in gleicher Weise wie an Hand des Fotometers nach Fig. 2 beschrieben.

Das zur Analyse eines Mehr-Komponenten-Mediums zu verwendende Fotometer nach Fig. 5 ist mit zwei Glühlampen 37 und 38 ausgestattet. Zur Erzeugung von Lichtstrahlen unterschiedlicher Frequenzen sind vor den Glühlampen 37 und 38 Interferenzfilter 39 und 40 vorgesehen. Die Glühlampen 37 und 38 werden durch einen elektronischen Geber so gesteuert, daß sie abwechselnd Lichtstrahlen auf den teildurchlässigen Spiegel 41 und den reflektierenden Spiegel 42 senden. Das vom Spiegel 41 reflektierte Licht tritt als Teilstrahl 43 durch die Lichtleitvorrichtung 44 in den Behälter 18 ein, den das Medium, z. B. ein Gas, in Richtung des Pfeiles 19 durchströmt. Dieser Teilstrahl 43 durchläuft das Medium auf der Strecke 45, tritt in die Lichtleitvorrichtung 46 ein, durch die er den Behälter 18 verläßt und trifft auf den fotoelektrischen Empfänger 47, der in dem Spektralbereich beider von den Interferenzfiltern 39 und 40 durchgelassenen Lichtstrahlen sensitiv ist.

Der Teil der den teildurchlässigen Spiegel 41 durchlaufenden Lichtstrahlen wird durch den geneigten Spiegel 42 durch die Lichtleitvorrichtung 48 in den Behälter 18 als Teilstrahl 49 reflektiert. Der Teilstrahl 49 durchläuft in dem zu analysierenden Medium die Strecke 50, verläßt den Behälter 18 durch die Lichtleitvorrichtung 51 und trifft auf den fotoelektrischen Empfänger 52, der wie der fotoelektrische Empfänger 47 in dem Spektralbereich beider von den Interferenzfiltern 39 und 40 durchgelassenen Lichtstrahlen empfindlich ist.

Den fotoelektrischen Empfängern 47 und 52 ist ein nicht dargestellter elektronischer Schalter zugeordnet, dem zwei elektronische Verarbeitungsstufen, insbesondere zwei logarithmisch arbeitende Differenzverstärker nachgeordnet sind. Der elektronische Schalter ist mit dem elektronischen Geber für die Lampen 37 und 38 synchronisiert. Der elektronische Schalter führt jeweils die Signale der bei den fotoelektrischen Empfänger 47 und 52 gegenphasig einem dieser elektronischen Verarbeitungsstufen zu.

Das anhand der Fig. 5 erläuterte Fotometer kann insbesondere zur Analyse eines Mediums benutzt werden, das aus zwei Komponenten besteht.

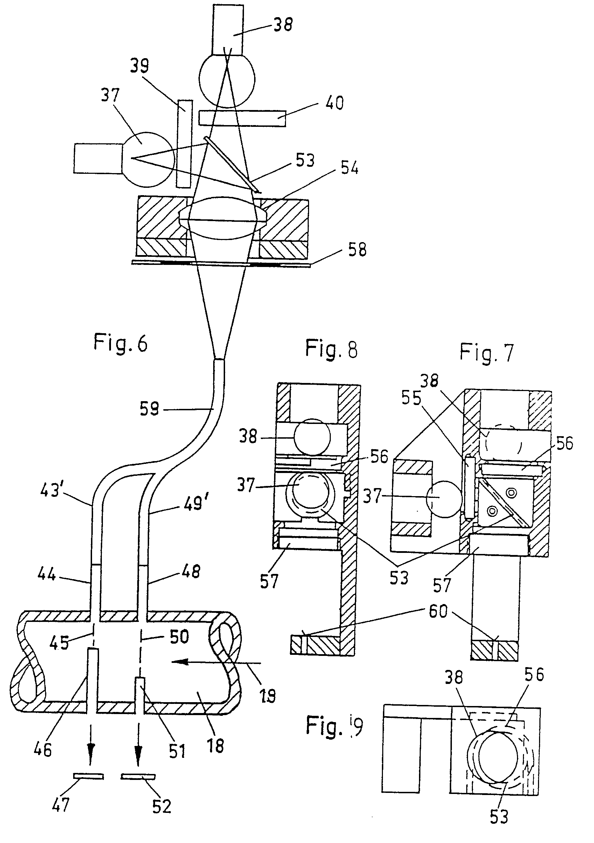

Bei dem Fotometer gemäß den Figuren 6 bis 9 sind als Lichtquellen zwei Glühlampen 37 und 38 vorgesehen. Das Licht der Glühlampe 37 wird durch das Interferenzfilter 39 und den teildurchlässigen Spiegel 53 auf die Kollimatorlinse 54 geleitet. Das Licht der Glühlampe 38 wird durch das Interferenzfilter 40 und den Spiegel 53 ebenfalls auf die Kollimatorlinse 54 geleitet. Das Interferenzfilter 39 ist in der Tasche 55 angeordnet; das Interferenzfilter 40 ist in der Tasche 56 angeordnet. Die Glühlampen 37 und 38 sind in einem rechten Winkel zueinander angeordnet. Die Kollimatorlinse wird in der Fassung 57 aufgenommen. Zur Änderung des Öffnungswinkels ist eine in ihrer Weite verstellbare Blende 58 vorgesehen.

Das von der Linse 54 gebündelte Licht wird, wie aus Fig. 6 ersichtlich, von dem Lichtfaserbündel 59 aufgenommen. Die Ankopplung des Lichtfaserbündels erfolgt durch die Buchse 60. Das Lichtfaserbündel 59 gabelt sich in die Arme 43' und 49'. Der Teillichtstrahl des Armes 43' wird durch den Lichtleitstab 44 in den vom zu analysierenden Medium durchströmten Behälter 18 geleitet; der Teillichtstrahl des Armes 49' wird durch den Lichtleitstab 48 dem Behälter 18 zugeführt. In dem Behälter 18 sind die lichtaufnehmenden Lichtleiter 46 und 51 so angeordnet, daß der von dem Lichtleitstab 44 zugeführte Teillichtstrahl eine Absorptionsstrecke 45 durchläuft, die kleiner ist als die Absorptionsstrecke 50 des Teillichtstrahles durch den Lichtleitstab 48.

Die Interferenzfilter 39 und 40 bewirken, daß das von der Glühlampe 37 stammende Licht sich in seiner Wellenlänge von dem Licht der Glühlampe 38 unterscheidet. Alternierend wird Licht der einen oder anderen Wellenlänge gleichzeitig über die Absorptionsstrecken 45 und 50 geführt. Zum Ein- und Ausschalten der Glühlampen 37 und 38 in dem gewünschten Rhythmus ist ein Schalter, insbesondere ein elektronischer Schalter, vorgesehen.

Der Teilstrahl, der längs der Absorptionsstrecke 45 das Medium, das den Behälter 18 in Richtung des Pfeiles 19 durchströmt, durchlaufen hat, wird von dem fotoelektrischen Empfänger 47 aufgenommen; der Teilstrahl längs der längeren Absorptionsstrecke 50 wird von dem fotoelektrischen Empfänger 52 aufgenommen. Den fotoelektrischen Empfängern 47 und 52 ist ein Schalter, insbesondere elektronischer Art, zugeordnet, der synchron zu dem die Glühlampen 37 und 38 schaltenden Schalter arbeitet. Durch diesen Schalter werden jeweils die Signale bei der fotoelektrischen Empfänger 47 und 52 gegenphasig einer von zwei nachgeordneten elektronischen Verarbeitungsstufen zugeführt.

Die Glühlampen 37 und 38, die Interferenzfilter 39 und 40 bilden zusammen mit dem teildurchlässigen Spiegel 53 der Kollimatorlinse 54 und der Blende 58 eine Baueinheit, deren prinzipieller Aufbau in den Figuren 7,8 und 9 dargestellt ist.

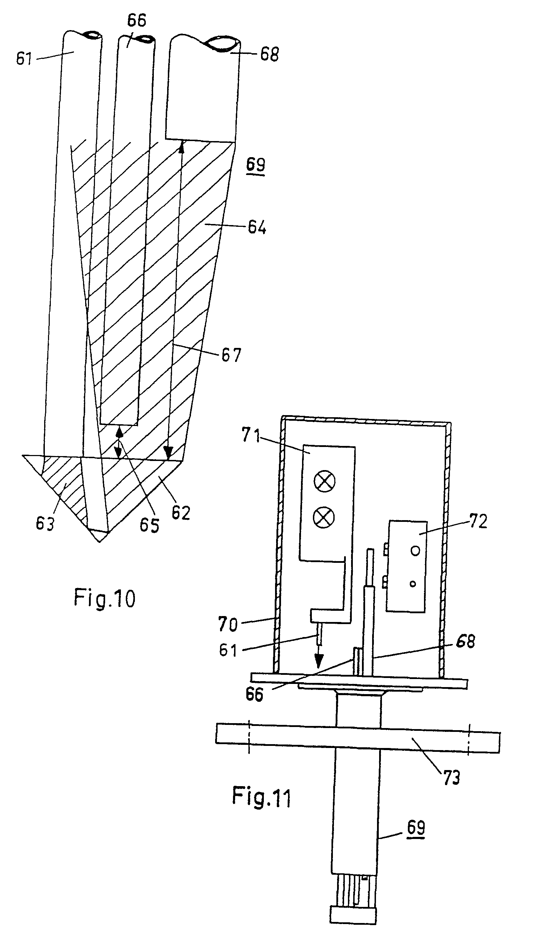

Fig. 10 zeigt den in das zu analysierende Medium einzusetzenden Teil des Fotometers. Er besteht aus dem Lichtleiter 61, der das Eingangslicht direkt an ein Prisma 62 weitergibt. Das an das Prisma 62 weitergegebene

EP 0 145 877 B1

Licht pflanzt sich im Prisma in Form des Kegelstumpfes 63 fort (enge Schraffur); es verläßt das Prisma in Form des Kegels 64 (weite Schraffur). Ein Teil des reflektierten Lichtes wird nach Durchlaufen einer kurzen Absorptionsstrecke 65 von dem Lichtleiter 66 (erster Teilstrahl) aufgenommen. Ein weiterer Teil des reflektierten Lichtes wird nach Durchlaufen der längeren Absorptionsstrecke 67 von dem Lichtleiter 68 aufgenommen (zweiter Teilstrahl). Die Längen der Absorptionsstrecken sind variabel; sie werden den jeweiligen Meßaufgaben angepaßt.

Eine hohe Meßempfindlichkeit wird dadurch erreicht, daß der Durchmesser des Lichtleiters 68 größer gewählt wird als der Durchmesser des Lichtleiters 66.

Die in Fig. 10 dargestellte Einheit 69 stellt einen Sensor dar, der zur in-line Messung geeignet ist. Sie läßt sich wie Fig. 11 erkennen läßt, baulich mit einem Gehäuse 70 zusammensetzen, in dem eine Strahlungsquelle 71 angeordnet ist sowie eine Empfangseinrichtung 72 für die Signale, die durch die Lichtleiter 66 und 68 zugeführt werden. Mit Hilfe des Flansches 73 wird das Fotometer an den von einem zu analysierenden Medium durchströmten Behälter angeschlossen. Als Strahlungsquelle 71 kann eine Anordnung gewählt werden, wie in Fig. 6 dargestellt.

Als Lichtleiter 61, 66 und 68 können starre Lichtleitstäbe verwendet werden. Ebenso lassen sich die Lichtleiter 61, 66 und 68 aus Faserbündeln herstellen. Es ist auch möglich, den unteren Teil der Lichtleiter starr auszubilden und den oberen Teil als Faserbündel.

Zur Kalibrierung des Fotometers wird eine Küvette in den zweiten Teilstrahl, d. h. in den Teilstrahl, der die längere Absorptionsstrecke durch läuft, geschoben. Die Empfangseinrichtung 72 läßt sich so ausbilden, daß sie diese Kalibrierküvette aufnehmen kann. Die Empfangseinrichtung kann mit einen Temperatur-Korrekturglied ausgestattet sein, das dem Umstand Rechnung trägt, daß das Fotometer in Medien unterschiedlicher Temperatur eingesetzt wird.

**Patentansprüche**

1. Fotometer zur kontinuierlichen Analyse eines gasförmigen oder eines flüssigen Mediums unter Verwendung von das Medium durchlaufenden Lichtstrahlen (25, 29) mit mehreren Wellenlängen, die von den einzelnen Komponenten des Mediums unterschiedlich stark absorbiert werden, mit einer Licht verschiedener Wellenlängen aussendenden Lichtquelle (20), einem Lichtempfänger (36) sowie einer Vorrichtung (24, 30) zur Erzeugung von Absorptionsstrecken unterschiedlicher Länge für die das Medium durchlaufenden Lichtstrahlen, dadurch gekennzeichnet,

— daß zwischen der Lichtquelle (20) und dem Medium eine Vorrichtung (21, 26) zur Aufteilung des von der Lichtquelle (20) kommenden Lichtstrahls in zwei Teillichtstrahlen (25, 29) sowie zur gleichzeitigen Einleitung dieser Teillichtstrahlen (25, 29) auf die Absorptionsstrecken unterschiedlicher Länge im Medium vorgesehen ist und
— daß zwischen dem Medium und dem Empfänger (36) eine Vorrichtung (31) zur gegenphasigen Unterbrechung des Teillichtstrahles und zwischen dieser Vorrichtung und dem Empfänger (36) ein dispergierendes optisches Element (34) vorgesehen ist.

2. Fotometer zur kontinuierlichen Analyse eines gasförmigen oder eines flüssigen Mediums unter Verwendung von das Medium durchlaufenden Lichtstrahlen (45, 50) mit mehreren Wellenlängen, die von den einzelnen Komponenten des Mediums unterschiedlich stark absorbiert werden, mit einer Licht einer ersten Wellenlänge aussendenden Lichtquelle (37), mindestens einem Lichtempfänger (47) sowie einer Vorrichtung (46, 51) zur Erzeugung von Absorptionsstrecken unterschiedlicher Länge für die das Medium durchlaufenden Lichtstrahlen, dadurch gekennzeichnet,

— daß eine weitere Lichtquelle (38) zur Erzeugung von Licht einer zweiten Wellenlänge vorgesehen ist, wobei die beiden Wellenlängen unterschiedlich sind,
— daß eine Schaltvorrichtung vorgesehen ist, die die beiden Lichtquellen abwechselnd einschaltet,
— daß zwischen den beiden abwechselnd eingeschalteten Lichtquellen (37, 38) und dem Medium eine Vorrichtung (41, 42) zur Aufteilung der von den Lichtquellen (37, 38) kommenden Lichtstrahlen in zwei Teillichtstrahlen (43, 49) sowie zur gleichzeitigen Einleitung dieser Teillichtstrahlen (43, 49) auf die Absorptionsstrecken unterschiedlicher Länge im Medium vorgesehen sind und
— daß zwei Lichtempfänger (47, 52) vorgesehen sind, auf die die Teillichtstrahlen (43, 49) nach Durchlaufen des Mediums treffen, und die den den Spektralbereichen des Lichtes der beiden Lichtquellen (37, 38) sensitiv sind.

3. Fotometer nach Anspruch 1 oder Anspruch 2, dadurch gekennzeichnet,

— daß die Vorrichtung zur Aufteilung der Lichtstrahlen aus einem ersten geneigten teildurchlässigen Spiegel (21 bzw. 41) besteht, der einen Teil der Lichtstrahlen auf einen zweiten geneigten Spiegel (26 bzw. 42) leitet und
— daß der erste Spiegel (21 bzw. 41) einen ersten Teilstrahl (22 bzw. 43) und der zweite Spiegel (26 bzw. 42) einen zweiten Teilstrahl (27 bzw. 43) in das Medium leitet.

4. Fotometer nach Anspruch 2, dadurch gekennzeichnet, daß als Lichtquellen zwei rechtwinkelig zueinander angeordneten Glühlampen (37, 38) mit vorgeschalteten Interferenzfiltern (39, 40) vorgesehen sind und daß zwischen den Glühlampen (37, 38) und dem Medium zur Einleitung der Lichtstrahlen in das Medium ein teildurchlässiger Spiegel (53), eine Kollimatorlinse (54) und ein Lichtfaserbündel (59) vorgesehen sind.

6

5. Fotometer nach Anspruch 4, dadurch gekennzeichnet, daß eine Blende (58) vorgesehen ist, durch die der Öffnungswinkel für die die Kollimatorlinse (54) verlassenden Lichtstrahlen einstellbar ist.

6. Fotometer nach Anspruch 2 und Anspruch 4, dadurch gekennzeichnet, daß zur Aufteilung der von den Lichtquellen (37, 38) kommenden Lichtstrahlen das Lichtfaserbündel (59) in zwei Arme (43', 49') geteilt ist, an die zur gleichzeitigen Einleitung der Teillichtstrahlen in das Medium zwei Lichtleitstäbe (44, 48) angekoppelt sind.

7. Fotometer nach Anspruch 4 und Anspruch 5, dadurch gekennzeichnet daß die Glühlampen (37, 38) und die Interferenzfilter (39, 40) zusammen mit dem teildurchlässigen Spiegel (53), der Kollimatorlinse (54) und der Blende (58, zu einer Baueinheit zusammengefaßt sind.

8. Fotometer nach Anspruch 1 oder Anspruch 2, dadurch gekennzeichnet, daß im Medium jeder Lichtstrahl durch einen Lichtleiter (61) einem optischen Umlenkorgan (62) zugeführt wird, das den Lichtstrahl derart reflektiert, daß ein Teil des reflektierten Lichtstrahles nach Durchlaufen einer kurzen Absorptionsstrecke (65) von einem ersten Lichtleiter (66) und ein anderer Teil des reflektierten Lichtstrahles nach Durchlaufen einer längeren Absorptionsstrecke (67) von einem zweiten Lichtleiter (68) aufgenommen wird.

9. Fotometer nach Anspruch 8, dadurch gekennzeichnet, daß als Umlenkorgan (62) ein Prisma mit verspiegelten Katheten vorgesehen ist, daß der Lichtleiter (61) für den Lichtstrahl direkt an die Oberfläche des Prismas angekoppelt ist und daß als Lichtleiter (61, 66, 68) Lichtleitstäbe vorgesehen sind.

10. Fotometer nach Anspruch 8, dadurch gekennzeichnet, daß die Lichtleiter (61, 66, 68) zusammen mit dem Umlenkorgan (62) eine bauliche Einheit bilden, die in einen vom zu analysierenden Medium durchströmten Behälter (69) eingesetzt wird.

## Claims

1. A photometer for the continuous analysis of a gaseous or of a liquid medium using beams of light (25, 29) with a plurality of wavelengths which pass through the medium and are absorbed to different extents by the individual components of the medium, having a light source (20) emitting light of different wavelengths, a light receiver (36) and a device (24, 30) for producing absorption paths of different length for the beams of light passing through the medium, characterised in

- that between the light source (20) and the medium there is provided a device (21, 26) for dividing the beam of light coming from the light source (20) into two component beams of light (25, 29) and for simultaneously introducing these component beams of light (25, 29) into the absorption paths of different length in the medium and
- that between the medium and the receiver (36) there is provided a device (31) for interrupting the component beam of light in phase opposition and between this device and the receiver (36) there is provided a dispersing optical element (34).

2. A photometer for the continuous analysis of a gaseous or of a liquid medium using beams of light (45, 50) with a plurality of wavelengths which pass through the medium and are absorbed to different extents by the individual components of the medium, having a light source (37) emitting light of a first wavelength, at least one light receiver (47), and a device (46, 51) for producing absorption paths of different length for the beams of light passing through the medium, characterised in

- that a further light source (38) is provided to produce light of a second wavelength, the two wavelengths being different,
- that a switching device is provided which switches on the two light sources alternately,
- that between the two light sources (37, 38) switched on alternately and the medium there is provided a device (41, 42) for dividing the beams of light coming from the light sources (37, 38) into two component beams of light (43, 49) and for simultaneously introducing these component beams of light (43, 49) into the absorption paths of different length in the medium and
- that two light receivers (47, 52) are provided on which the component beams of light (43, 49) impinge after passing through the medium and which are sensitive in the spectral ranges of the light of the two light sources (37, 38).

3. A photometer according to Claim 1 or Claim 2 characterised in
- that the device for dividing the beams of light consists of a first inclined partially reflective mirror (21 or 41) which conveys part of the beams of light to a second inclined mirror (26 or 42), and
- that the first mirror (21 or 41) conveys a first component beam (22 or 43) and the second mirror (26 or 42) conveys a second component beam (27 or 43) into the medium.

4. A photometer according to Claim 2, characterised in that two incandescent lamps (37, 38) arranged at right angles to one another with interference filters (39, 40) connected in series are provided as light sources, and that a partiallyreflec-

7

ting mirror (53), a collimator lens (54) and a bunch of optical fibres (59) are provided between the incandescent lamps (37, 38) and the medium to introduce the beams of light into the medium.

5. A photometer according to Claim 4, characterised in that a diaphragm (58) is provided by means of which the aperture angle for the beams of light leaving the collimator lens (54) is adjustable.

6. A photometer according to Claim 2 and Claim 4, characterised in that in order to divide the beams of light coming from the light sources (37, 38), the bunch of optical fibres (59) is divided into two branches (43', 49') to which two optical guide rods (44, 48) are coupled for the simultaneous introduction of the component beams of light into the medium.

7. A photometer according to Claim 4 and Claim 5, characterised in that the incandescent lamps (37, 38) and the interference filters (39, 40) together with the partially reflecting mirror (53), the collimator lens (54) and the diaphragm (58) are combined to form a structural unit.

8. A photometer according to Claim 1 or Claim 2, characterised in that, in the medium, each beam of light is supplied through an optical conductor (61) to an optical deflecting member (62) which reflects the beam of light in such a manner that one part of the reflected beam of light is received by a first optical conductor (66) after passing through a short absorption path (65), and another part of the reflected beam of light is received by a second optical conductor (68) after passing through a longer absorption path (67).

9. A photometer according to Claim 8, characterised in that a prism with mirror-coated cathetuses is provided as a deflecting member (62), that the optical conductor (61) for the beam of light is coupled directly to the surface of the prism and that optical guide rods are provided as optical conductors (61, 66, 68).

10. A photometer according to Claim 8, characterised in that the optical conductors (61, 66, 68) together with the deflecting member (62) form a structural unit which is inserted in a container (69) through which the medium to be analyzed flows.

**Revendications**

1. Photomètre pour l'analyse en continu d'un milieu gazeux ou d'un milieu liquide avec utilisation de rayons lumineux (25, 29) à plusieurs longueurs d'onde, traversant le milieu, qui sont plus ou moins fortement absorbés par les composants individuels du milieu, comportant une source lumineuse (20) émettant une lumière à diverses longueurs d'onde, un photorécepteur (36), ainsi qu'un dispositif (24, 30) destiné à engendrer des trajets d'absorption de longueurs distinctes pour les rayons lumineux traversant le milieu, caractérisé en ce que :

– entre la source lumineuse (20) et le milieu est prévu un dispositif (21, 26) pour la division du rayon lumineux, provenant de la source lumineuse (20), en deux rayons lumineux partiels (25, 29) ainsi que pour l'envoi simultané de ces rayons lumineux partiels (25, 29) sur les trajets d'absorption de diverses longueurs dans le milieu, et
– entre le milieu et le récepteur (36) est prévu un dispositif (31) pour l'interruption en opposition de phase du rayon lumineux partiel, et entre ce dispositif et le récepteur (36) est disposé un élément optique dispersant (34).

2. Photomètre pour l'analyse en continu d'un milieu gazeux ou d'un milieu liquide avec utilisation de rayons lumineux (47, 50) à plusieurs longueurs d'onde, traversant le milieu, qui sont plus ou moins fortement absorbés par les composants individuels du milieu, comportant une source lumineuse (37) émettant de la lumière à une première longueur d'onde, au moins un photorécepteur (47) ainsi qu'un dispositif (46, 51) destiné à engendrer des trajets d'absorption de différentes longueurs pour les rayons lumineux traversant le milieu, caractérisé en ce que:

– est disposée une autre source lumineuse (38) pour la production de lumière à une seconde longueur d'onde, les deux longueurs d'ondes étant différentes,
– on prévoit un dispositif commutateur qui allume alternativement les deux sources lumineuses
– entre les deux sources lumineuses (37, 38) allumées alternativement et le milieu, on prévoit un dispositif (41, 42) pour la division en deux rayons lumineux partiels (43, 49) des rayons lumineux provenant des sources lumineuses (37, 38) ainsi que pour l'envoi simultané de ces rayons lumineux partiels (43, 49) sur les trajets d'absorption de différentes longueurs dans le milieu, et
– sont disposés deux photorécepteurs (47, 52) sur lesquels viennent frapper les deux rayons partiels après avoir traversé le milieu, et qui sont sensibles dans la région spectrale de la lumière des deux sources lumineuses (37, 38).

3. Photomètre selon la revendication 1 ou la revendication 2, caractérisé en ce que:

– le dispositif pour la division des rayons lumineux est constitué d'un premier miroir semi-transparent incliné (21 ou 41) qui envoie une partie des rayons lumineux sur un second miroir incliné (26 ou 42) et

—  le premier miroir (21 ou 41) envoie un premier rayon partiel (22 ou 43) dans le milieu, et le second miroir (26 ou 42) envoie un second rayon partiel (27 ou 49) dans le milieu.

4. Photomètre selon la revendication 2, caractérisé en ce que l'on prévoit, en tant que sources lumineuses, deux lampes à incandescence (37, 38) disposées à angle droit l'une par rapport à l'autre, avec des filtres interférentiels (39, 40) disposés en avant de celles-ci, et en ce que, entre les lampes à incandescence (37, 38) sont disposés un miroir semitransparent (53), une lentille collimatrice (54) et un faisceau de fibres optiques (59) pour le guidage des rayons lumineux dans le milieu.

5. Photomètre selon la revendication 4, caractérisé en ce que l'on prévoit un diaphragme (58) permettant de régler l'angle d'ouverture pour les rayons lumineux quittant la lentille collimatrice (54).

6. Photomètre selon la revendication 2 ou la revendication 4, caractérisé en ce que, pour la division des rayons lumineux provenant des sources lumineuses (37, 38), le faisceau de fibres optiques (59) est divisé en deux bras (43', 49') auxquels sont raccordés deux barreaux-guides de lumière (44, 48) pour l'envoi simultané des rayons lumineux partiels dans le milieu.

7. Photomètre selon la revendication 4 et la revendication 5, caractérisé en ce que les lampes à incandescence (37, 38) et les filtres interférentiels (39, 40), conjointement avec le miroir semitransparent (53), la lentille collimatrice (54) et le diaphragme (58) sont assemblés en un seul composant.

8. Photomètre selon la revendication 1 ou la revendication 2, caractérisé en ce que, dans le milieu, chaque rayon lumineux est envoyé, par un guide de lumière (61), à un organe de renvoi optique (62) qui réfléchit le rayon lumineux, de sorte qu'une partie du rayon lumineux réfléchi, après avoir suivi un court trajet d'absorption, est reçue par un premier guide de lumière (66) et une autre partie du rayon lumineux réfléchi, après avoir suivi un trajet d'absorption plus long (67) est reçue par un second guide de lumière (68).

9. Photomètre selon la revendication 8, caractérisé en ce que l'on prévoit, en tant qu'organe de renvoi (62) un prisme aux côtés droits réfléchissants, en ce que le guide de lumière (61) pour le rayon lumineux est directement connecté à la surface du prisme, et en ce que l'on prévoit, en tant que guide de lumière (61, 66, 68), des barreaux-guides de lumière.

10. Photomètre selon la revendication 8, caractérisé en ce que les guides de lumière (61, 66, 68) forment, conjointement avec l'organe de renvoi (62), un seul composant qui est inséré dans un récipient (69) traversé par le milieu à analyser.

Fig.1

Fig. 2

Fig.3

Fig. 4

Fig. 5

Fig. 6

Fig. 8

Fig. 7

Fig. 9

61

66

68

69

64

67

69

63    65    62

Fig.10

71

72

70

61

68

66

73

Fig.11

69

7